**Europäisches Patentamt**

**European Patent Office**

**Office européen des brevets**

(19)

(11) Veröffentlichungsnummer : **0 545 009 B1**

(12)

# EUROPÄISCHE PATENTSCHRIFT

(45) Veröffentlichungstag der Patentschrift :
07.12.94 Patentblatt 94/49

(51) Int. Cl.$^5$ : **G05B 13/02**

(21) Anmeldenummer : **92116070.1**

(22) Anmeldetag : **19.09.92**

(54) **Verfahren zur automatischen Selbstanpassung von Parametern eines Reglers.**

(30) Priorität : **04.12.91 CH 3563/91**

(43) Veröffentlichungstag der Anmeldung :
**09.06.93 Patentblatt 93/23**

(45) Bekanntmachung des Hinweises auf die
Patenterteilung :
**07.12.94 Patentblatt 94/49**

(84) Benannte Vertragsstaaten :
**AT BE CH DE DK FR GB IT LI NL SE**

(56) Entgegenhaltungen :
**US-A- 3 727 035**

(73) Patentinhaber : **Landis & Gyr Business
Support AG
CH-6301 Zug (CH)**

(72) Erfinder : **Michalek, Jan
Kirchgasse 11
CH-8907 Wettswil (CH)**

## Beschreibung

Die Erfindung bezieht sich auf ein Verfahren zur automatischen Selbstanpassung von Parametern eines Reglers gemäss dem Oberbegriff des Anspruchs 1.

Die Grundaufgabe eines Reglers in einem Prozess besteht darin, bei einem konstanten Sollwert $w[t]$ einen vorhandenen Zustand des Prozesses aufrechtzuerhalten und bei einer Änderung des Sollwertes $w[t]$ den Zustand des Prozesses möglichst rasch und genau in einen neu geltenden Zustand zu überführen. Die Einstellung des Reglers beeinflusst dabei die Regelgüte, d. h. die Qualität, mit der die Grundaufgabe erfüllt wird. Zur Beurteilung der Regelgüte werden verschiedene Kriterien angewendet, wovon viele einen Verlauf einer Regelabweichung nach einer sprungförmigen Änderung des Sollwertes $w[t]$ bewerten. Zu den bekanntesten Gütekriterien dieser Klasse gehört die sogenannte quadratische Regelfläche, die dem Integral der Regelabweichung nach einem Sollwertsprung entspricht. Das Ziel ist es, den Regler optimal einzustellen, d. h. mit einer gewählten Einstellung ein Optimum eines gewählten Gütekriteriums zu erreichen. Bei konventionellen Reglern wird eine Einstellung des Reglers in der Regel von Hand vorgenommen. Ein selbstanpassender adaptiver Regler hat seinerseits zusätzlich die Aufgabe, seine optimale Einstellung im Sinne eines optimal gewählten Gütekriteriums automatisch selber zu finden. Falls dabei die Parameter eines zu regelnden Prozesses sich ändern, soll auch die Reglereinstellung neu optimiert werden.

Ein Verfahren der im Oberbegriff des Anspruchs 1 genannten Art ist aus der CH-PS 675 779 bekannt, in dem ein PID-Regelkreis und ein Adaptations-Regelkreis vorhanden sind und wo ein Dämpfungsfaktor und eine Zeitkonstante des PID-Regelkreises sowie ein Überschwingen eines Istwertsignals als Gütekriterien verwendet werden, die höchstens einmal pro Sollwertsprung angepasst werden. Dabei ist ein relativ grosser Programmieraufwand eines Mikrocomputers zur Erfassung und Auswertung der Gütekriterien erforderlich.

Der Erfindung liegt die Aufgabe zugrunde, die Anordnung der eingangs genannten Art so zu verbessern, dass Schätzwerte der Gütekriterien fortlaufend aus aufeinanderfolgenden Messwerten einer Regelgrösse ermittelt werden können, unter gleichzeitiger Niedrighaltung des Programmieraufwandes eines verwendeten Mikrocomputers.

Die genannte Aufgabe wird erfindungsgemäss durch die im kennzeichenden Teil des Anspruchs 1 angegebenen Merkmale gelöst.

Vorteilhafte Ausgestaltungen der Erfindung ergeben sich aus den abhängigen Ansprüchen.

Ein Ausführungsbeispiel der Erfindung ist in der Zeichnung dargestellt und wird im folgenden näher beschrieben.

Es zeigen:

Fig. 1     eine schematische Darstellung eines geschlossenen Adaptations-Regelkreises zur Durchführung des erfindungsgemässen Verfahrens und

Fig. 2     eine Sprungantwort-Kennlinie eines geschlossenen Regelkreises.

Gleiche alphanumerische Zeichen bezeichnen in allen Figuren der Zeichnung gleiche Teile.

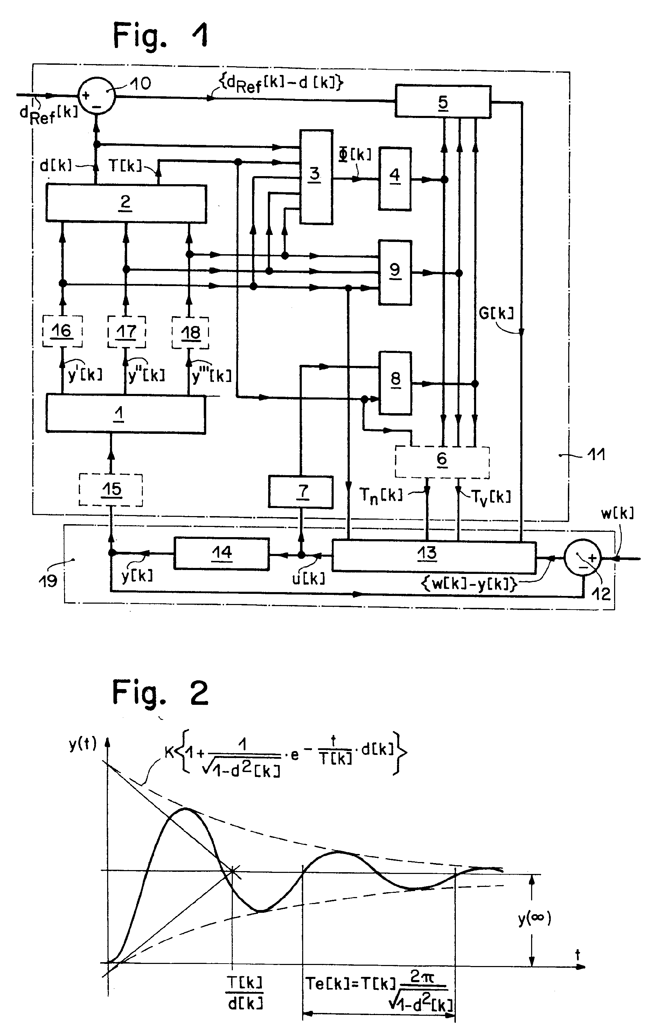

Der in der Fig. 1 dargestellte geschlossene Adaptations-Regelkreis zur Durchführung des erfindungsgemässen Verfahrens enthält einen ersten Funktionsblock 1, einen zweiten Funktionsblock 2, einen dritten Funktionsblock 3, einen ersten Freigabe-Funktionsblock 4, einen vierten Funktionsblock 5, einen fakultativ vorhandenen fünften Funktionsblock 6, einen Überwachungs-Funktionsblock 7, einen zweiten Freigabe-Funktionsblock 8, einen dritten Freigabe-Funktionsblock 9 und ein erstes Subtraktionsglied 10, die zusammen eine Anpass-Schaltung 11 bilden, sowie ein zweites Subtraktionsglied 12, einen Regler 13 und eine analoge Regelstrecke 14. Fakultativ sind ausserdem noch ein Filter 15 oder drei Filter 16, 17 und 18 vorhanden.

Ein Regelkreis 19 enthält das zweite Subtraktionsglied 12, den Regler 13 und die Regelstrecke 14, welche in der angegebenen Reihenfolge in einer Kettenschaltung hintereinander geschaltet sind. Dabei ist jeweils ein Ausgang des einen Bauelementes des Regelkreises 19 mit einem Eingang eines in der Kettenschaltung unmittelbar nachfolgenden Bauelementes verbunden. Der Regler 13 enthält vorzugsweise einen Mikrocomputer und verarbeitet dann digitale diskrete Werte $y[k]$ eines Istwertes $y[t]$ einer Regelgrösse. Dabei bezeichnet der Buchstabe t die Zeit. Die zeitlich nacheinander, periodisch mit einer Periode $T_o$ auftretenden diskreten Werte $y[k]$ sind in der Reihenfolge ihres Erscheinens fortlaufend durchnumeriert und mit einer ganzzahligen laufenden Nummer k versehen. Nachfolgend gilt die Annahme, dass die Periode $T_o$ gleich einer Zeiteinheit ist. Zu jedem diskreten Wert $y[k]$ des Istwertes $y[t]$ der Regelgrösse gehört ein diskreter Wert $w[k]$ eines Sollwertes der Regelgrösse, ein diskreter Wert $G[k]$ eines Verstärkungsfaktors des Reglers 13, ein diskreter Wert $u[k]$ einer am Ausgang des Reglers 13 vorhandenen Stellgrösse, ein diskreter Wert $y'[k]$ einer ersten zeitlichen Ableitung des Istwertes $y[t]$ der Regelgrösse, ein diskreter Wert $y''[k]$ einer zweiten zeitlichen Ableitung des Istwertes $y[t]$ der Regelgrösse und ein diskreter Wert $y'''[k]$ einer dritten zeitlichen Ableitung des Istwertes $y[t]$ der Regelgrösse.

Im Regelkreis 19 wird jeweils mittels des zweiten Subtraktionsgliedes 12 der diskrete Wert $y[k]$ des Istwertes y[t] der Regelgrösse mit dem diskreten Wert w[k] des Sollwertes der Regelgrösse verglichen und eine so erzeugte diskrete Sollwert/Istwert-Differenz w[k]-y[k] im Regler 13 mit dem diskreten Wert G[k] des Verstärkungsfaktors verstärkt zwecks Erzeugung am Ausgang des Reglers 13 des diskreten Wertes u[k] der Stellgrösse, welcher dann der Regelstecke 14 zugeführt wird zwecks Erzeugung am Ausgang der Regelstrecke 14 des diskreten Wertes y[k] des Istwertes y[t] der Regelgrösse. Der diskrete Wert w[k] des Sollwertes der Regelgrösse ist dazu auf einen Plus-Eingang des zweiten Subtraktionsgliedes 12 geführt, während der am Ausgang der Regelstrecke 14 anstehende diskrete Wert y[k] des Istwertes y[t] der Regelgrösse einerseits auf einen Minus-Eingang des zweiten Subtraktionsgliedes 12 und andererseits unmittelbar oder über das fakultativ vorhandene Filter 15 auf einen Eingang des Funktionsblocks 1 geführt ist. Der letztere besitzt für drei diskrete Schätzwerte y'[k], y''[k] und y'''[k] der drei ersten zeitlichen Ableitungen des Istwertes y[t] der Regelgrösse je einen getrennten Ausgang. Jeder dieser getrennten Ausgänge des Funktionsblocks 1 ist entweder unmittelbar oder über je ein fakultativ vorhandenes Filter 16 bzw. 17 bzw. 18 auf einen zugehörigen Eingang der Funktionsblöcke 2, 3 und 9 geführt. Die Filter 16 bis 18 einerseits und das Filter 15 andererseits schliessen sich gegenseitig aus, d. h. wenn das Filter 15 vorhanden ist, sind die Filter 16 bis 18 abwesend, und umgekehrt. Entweder werden dann die diskreten Werte y[k] des Istwertes y[t] der Regelgrösse im Filter 15 gefiltert, bevor sie weiterverarbeitet werden, oder die diskreten Schätzwerte y'[k], y''[k] und y'''[k] der drei ersten zeitlichen Ableitungen des Istwertes y[t] der Regelgrösse werden in je einem Filter 16 bzw. 17 bzw. 18 gefiltert, bevor sie weiterverarbeitet werden.

Der Funktionsblock 2 besitzt einen ersten Ausgang, an dem diskrete Schätzwerte d[k] eines Dämpfungsfaktors des Regelkreises 19 anstehen, und einen zweiten Ausgang, an dem diskrete Schätzwerte T[k] einer Zeitkonstante des Regelkreises 19 anstehen. Jeder der beiden Ausgänge des Funktionsblocks 2 ist mit je einem weiteren Eingang des Funktionsblocks 3 verbunden. Der erste Ausgang des Funktionsblocks 2 ist ausserdem auf einen Minus-Eingang des ersten Subtraktionsgliedes 10 geführt, während der zweite Ausgang des Funktionsblocks 2 zusätzlich noch mit je einem ersten Eingang des Funktionsblocks 8 und, falls vorhanden, des Funktionsblocks 6 verbunden ist. Ein diskreter Wert $d_{Ref}$[k] des Sollwertes des Dämpfungsfaktors des Regelkreises 19 ist auf einen Plus-Eingang des ersten Subtraktionsgliedes 10 geführt, dessen Ausgang mit einem ersten Eingang des Funktionsblocks 5 verbunden ist. Der mit dem Eingang der Regelstrecke 14 verbundene Ausgang des Reglers 13 ist ausserdem über den Überwachungs-Funktionsblock 7 auf einen zweiten Eingang des Funktionsblocks 8 geführt, während der Ausgang des Funktionsblocks 3 mit einem Eingang des Funktionsblocks 4 verbunden ist. Ein Ausgang des Funktionsblocks 4 ist auf einen zweiten Eingang, ein Ausgang des Funktionsblocks 9 auf einen dritten Eingang und ein Ausgang des Funktionsblocks 8 auf einen vierten Eingang jeweils des Funktionsblocks 5 und, falls vorhanden, des Funktionsblocks 6 geführt. Der Ausgang des Funktionsblocks 5 ist mit einem ersten Parametereingang, zwei Ausgänge des Funktionsblocks 6, falls vorhanden, mit einem zweiten bzw. dritten Parametereingang und derjenige Ausgang des Funktionsblocks 1, an dem die diskreten Schätzwerte y'[k] der ersten zeitlichen Ableitung des Istwertes y[t] der Regelgrösse anstehen, mit einem vierten Parametereingang jeweils des Reglers 13 verbunden, wobei gegebenenfalls die letztere Verbindung über das Filter 16 erfolgt.

Der diskrete Wert y[k] des Istwertes y[t] der Regelgrösse wird somit mit dem diskreten Wert w[k] des Sollwertes der Regelgrösse verglichen, indem im zweiten Subtraktionglied 12 die diskrete Sollwert/Istwert-Differenz w[k]-y[k] gebildet wird, die dann dem Eingang des Reglers 13 zugeführt wird, wo sie mit dem am ersten Parametereingang des Reglers 13 anstehenden diskreten Wert G[k] des Verstärkungsfaktors des Reglers 13 multipliziert und gegebenenfalls mit einem am zweiten und dritten Parametereingang des Reglers 13 anstehenden diskreten Wert $T_n$[k] bzw. $T_v$[k] einer Nachstellzeit und einer Vorhaltezeit versehen wird.

Im erfindungsgemässen Verfahren werden der Dämpfungsfaktor und die Zeitkonstante des Regelkreises 19 als Gütekriterien verwendet. Eine optimale Einstellung des Regelkreises 19 im Sinn einer automatischen Selbstanpassung der optimal gewählten Gütekriterien wird dabei erreicht durch eine fortlaufende Auswertung während der Regelung der diskreten Schätzwerte d[k] und T[k] der Sprungantwort des geschlossenen Regelkreises 19 und deren stufenweise Optimierung durch Verstellung von diskreten Werten G[k] und gegebenenfalls $T_n$[k] sowie $T_v$[k] des Verstärkungsfaktors, der Nachstellzeit und der Vorhaltezeit, die jeweils dem Regler 13 über dessen drei erste Parametereingänge zugeführt werden.

Zu diesem Zweck werden im Funktionsblock 1, ausgehend von jedem diskreten Wert y[k] des Istwertes y[t] der Regelgrösse, jeweils der diskrete Schätzwert y'[k] der ersten zeitlichen Ableitung, der diskrete Schätzwert y''[k] der zweiten zeitlichen Ableitung und der diskrete Schätzwert y'''[k] der dritten zeitlichen Ableitung der Regelgrösse ermittelt. Die dabei verwendeten diskreten Werte y[k] des Istwertes y[t] der Regelgrösse werden entweder ungefiltert oder vorher im Filter 15 gefiltert. Die diskreten Schätzwerte y'[k], y''[k] und y'''[k] der drei zeitlichen Ableitungen des Istwertes y[t] der Regelgrösse werden ihrerseits entweder ungefiltert oder mittels der Filter 16 bis 18 gefiltert zur Weiterverarbeitung an die Funktionsblöcke 2, 3 und 9 weitergeleitet.

Anschliessend werden im Funktionsblock 2 mittels der diskreten Schätzwerte y'[k], y''[k], y'''[k] der drei ersten zeitlichen Ableitungen des Istwertes y[t] der Regelgrösse jeweils der zugehörige diskrete Schätzwert d[k] des Dämpfungsfaktors und der zugehörige diskrete Schätzwert T[k] der Zeitkonstante des Regelkreises 19 ermittelt.

Der diskrete Schätzwert d[k] des Dämpfungsfaktors des Regelkreises 19 wird seinerseits jeweils als Istwert im ersten Subtraktionsglied 10 mit dem diskreten Wert $d_{Ref}[k]$ des Sollwertes des Dämpfungsfaktors des Regelkreises 19 verglichen zwecks Ermittlung eines diskreten Schätzwertes $d_{Ref}[k]$ - d[k] einer Sollwert/Istwert-Differenz des Dämpfungsfaktors.

Ausgehend vom ermittelten diskreten Schätzwert $d_{Ref}[k]$ - d[k] der Sollwert/Istwert-Differenz des Dämpfungsfaktors wird dann jeweils im Funktionsblock 5, falls dessen Betrieb durch die drei Freigabe-Funktionsblöcke 4, 8 und 9 freigegeben ist, der zugehörige diskrete Wert G[k] des Verstärkungsfaktors ermittelt, welcher anschliessend über den ersten Parametereingang dem Regler 13 zugeführt wird, wo der Wert von dessem Reglerverstärkungsfaktor jeweils neueingestellt wird, indem er gleich dem ermittelten diskreten Wert G[k] des Verstärkungsfaktors gesetzt wird.

Eine Optimierung der Reglereinstellung nach einem quadratischen Gütekriterium liefert eine oszillatorische Sprungantwort. Die charakteristische Gleichung des geschlossenen Regelkreises 19 besitzt in diesem Fall ein dominantes Paar von komplex konjugierten Wurzeln, die die Gestalt der Sprungantwort massgeblich bestimmen. Optimale Sprungantworten von verschiedenen Regelkreisen sehen in diesem Fall ähnlich aus. Sie setzten sich aus Exponentialfunktionen oder einer einzigen gedämpften Sinuswelle zusammen, während zusätzliche Oberschwingungen vernachlässigbar klein sind. In diesem Fall kann das Verhalten des geschlossenen Regelkreises 19, unabhängig von der Ordnung der Regelstrecke 14, durch ein Modell zweiter Ordnung angenähert werden. Die Beziehung zwischen dem Verlauf eines Sollwertes w[t] der Regelgrösse als Eingangsfunktion und dem Verlauf des Istwertes y[t] der Regelgrösse als Ausgangsfunktion kann dann durch eine lineare Differentialgleichung zweiter Ordnung beschrieben werden, deren abgeleitete Gleichung wie folgt lautet:

$$T^2.y'''[t] + 2d.T.y''[t] + y'[t] = K.\{w'[t] + b_1.w''[t] + ...] \quad (I).$$

Wenn w[t] eine Sprungfunktion mit einem Sprung im Augenblick t=0 ist, dann verschwinden für t > 0 alle zeitlichen Ableitungen von w[t] auf der rechten Seite der Gleichung (I), so dass für jeden beliebigen Zeitpunkt t > 0 die folgende Gleichung gilt:

$$T^2.y'''[t] + 2d.T.y''[t] + y'[t] = 0 \quad (II).$$

Nachfolgend gilt einfachheitshalber die Annahme, dass die Filter 15 bis 18 nicht vorhanden sind.

Die für die Berechnung von d[k] und T[k] benötigten Schätzwerte der drei ersten zeitlichen Ableitungen y'[t], y''[t] und y'''[t] sind in einem mit einem diskreten Regler 13 ausgerüsteten Regelkreis 19 nicht direkt messbar. Sie können aus diskreten Werten des Istwertes y[t] der Regelgrösse nur angenähert ermittelt werden, wenn zwei diskrete Werte y[k-1] und y[k] des Istwertes y[t] der Regelgrösse zu zwei verschiedenenen Zeitpunkten $t_1=[k-1].T_O=k-1$ und $t_2=k.T_O=k$ bekannt sind, mit $T_O=1$.

In diesem Fall kann der zum Zeitpunkt $t_2=k$ gehörende diskrete Schätzwert y'[k] der ersten zeitlichen Ableitung des Istwertes y[t] der Regelgrösse mittels der Gleichung

$$y'[k] = y[k] - y[k - 1] \quad (III)$$

angenähert berechnet werden.

Der zugehörige diskrete Schätzwert y''[k] der zweiten zeitlichen Ableitung des Istwertes y[t] der Regelgrösse ergibt sich dann aus der Gleichung

$$y''[k] = y'[k] - y'[k - 1] \quad (IV)$$

und der zugehörige diskrete Schätzwert y'''[k] der dritten zeitlichen Ableitung des Istwertes y[t] der Regelgrösse aus der Gleichung

$$y'''[k] = y''[k] - y''[k - 1] \quad (V),$$

wobei y[k] der zum Zeitpunkt $t_2=k$ neu gemessene diskrete Wert und y[k-1] der davor zum Zeitpunkt $t_1=k-1$ zuletzt gemessene diskrete Wert des Istwertes y[t] der Regelgrösse ist. Die beiden diskreten Werte y[k] und y[k-1] liegen dabei zeitlich um eine Zeiteinheit $T_O=1$ auseinander.

Die diskreten Schätzwerte y'[k], y''[k] und y'''[k], die mittels der Gleichungen III bis V angenähert berechnet werden, sind die zum Zeitpunkt $t_2=k$ geltenden diskrete Schätzwerte der drei ersten zeitlichen Ableitungen des Istwertes y[t] der Regelgrösse.

Die diskreten Schätzwerte y'[k-1] und y''[k-1] sowie ein nachfolgend noch verwendeter diskreter Schätzwert y'''[k-1] sind dagegen vorherige zum Zeitpunkt $t_1=k-1$ ermittelte diskrete Schätzwerte der drei ersten zeitlichen Ableitungen des Istwertes y[t] der Regelgrösse, die zuletzt bisher, d. h. bis zum Zeitpunkt $t_2=k$, gegolten haben.

Zu den Zeitpunkten $t_1=k-1$ und $t_2=k$ gelten in erster Annäherung gemäss Gleichung II, mit d=d[k] und T=T[k]:

$$T^2[k].y'''[k - 1] + 2.d[k].T[k].y''[k - 1] + y'[k - 1] = 0 \quad (VI)$$

und

$$T^2[k].y'''[k] + 2.d[k].T[k].y''[k] + y'[k] = 0 \quad (VII)$$

Daraus ergibt sich, mit $D_s[k]$ unterschiedlich von Null:

$$T[k] = \{ - D_1[k]/D_s[k]\}^{1/2} \quad (VIII)$$

und

$$d[k] = - D_2[k]/\{2.T[k].D_s[k]\} \quad (IX),$$

mit:

$$D_1[k] = y'[k - 1].y''[k] - y''[k - 1].y'[k] \quad (X),$$
$$D_2[k] = y'''[k - 1].y'[k] - y'[k - 1].y'''[k] \quad (XI)$$

und

$$D_s[k] = y'''[k - 1].y''[k] - y''[k - 1].y'''[k] \quad (XII).$$

Im Funktionsblock 2 werden ausgehend von den im Funktionsblock 1 ermittelten und abgespeicherten diskreten Schätzwerten $y'[k]$, $y''[k]$, $y'''[k]$, $y'[k-1]$, $y''[k-1]$ und $y'''[k-1]$ mittels der Gleichungen X bis XII die diskreten Schätzwerte $D_1[k]$, $D_2[k]$ und $D_s[k]$ berechnet und anschliessend mittels der Gleichung VIII der diskrete Schätzwert $T[k]$ der Zeitkonstante und dann mittels der Gleichung IX der diskrete Schätzwert $d[k]$ des Dämpfungsfaktors des Regelkreises 19 ermittelt.

Die Filter 15 bis 18 veranlassen, falls vorhanden, dass die Signale $y[k]$ bzw. $y'[k]$, $y''[k]$ und $y'''[k]$ durch Tiefpässe gefiltert werden, falls der gemessene Istwert $y[t]$ der Regelgrösse am Ausgang der Regelstrecke 14 z. B. verrauscht ist.

Die Sprungantwort des Regelkreises 19 hat z. B. die in der Fig. 2 dargestellte Gestalt und besteht dann aus einer harmonischen Schwingung mit einer Periode $T_e[k] = 2\pi.T[k]/\{1-d^2[k]\}^{1/2}$, deren Hüllkurve gemäss einer Exponentialfunktion mit einer Zeitkonstante $T[k]/d[k]$ abklingt. $T_e[k]$ ist dabei der Zeitabstand zwischen zwei benachbarten Maxima bzw. Minima oder zwischen zwei benachbarten ungeradzahligen oder geradzahligen Nulldurchgängen der Sprungantwort.

Die Periode $T_e[k]$ der Oszillationen hängt lediglich von den diskreten Schätzwerten $T[k]$ und $d[k]$ der Zeitkonstante und des Dämpfungsfaktors ab. Je kleiner $d[k]$, desto grösser sind die relativen Überschwingungen der Istwerte $y[t]$ der Regelgrösse über deren Endwert hinaus und desto langsamer klingen die Oszillationen ab. Für $d[k] > 1$ hingegen ist der Regelvorgang aperiodisch. Der diskrete Schätzwert $d[k]$ des Dämpfungsfaktors bestimmt somit massgeblich die Regelgüte. Mit anderen Worten, der diskrete Schätzwert $d[k]$ des Dämpfungsfaktors kann als ein Mass für die Güte des Regelvorgangs angesehen werden.

Wenn der diskrete Schätzwert $d[k]$ des Dämpfungsfaktors des Regelkreises 19 sich ändert, muss der diskrete Wert des Verstärkungsfaktors von $G[k-1]$ nach $G[k]$ geändert werden. Dabei ist $G[k-1]$ der vorherige zum Zeitpunkt $t_1 = k-1$ ermittelte diskrete Wert des Verstärkungsfaktors, der zuletzt bisher, d. h. bis zum Zeitpunkt $t_2 = k$, gegolten hat.

Bezüglich des Zusammenhangs zwischen $d[k]$ und $G[k-1]$ gilt nachfolgend die Annahme:

$$M_d.d[k] = P - \ln \{M_G.G[k - 1]\} \quad (XIII),$$

wobei $P$, $M_d$ und $M_G$ drei Konstanten sind.

Wenn der im Funktionsblock 2 als Istwert ermittelte Schätzwert $d[k]$ des Dämfungsfaktors des Regelkreises 19 gleich dem diskreten Wert $d_{Ref}[k]$ von dessem Sollwert ist, gilt die Gleichung:

$$M_d.d_{Ref}[k] = P - \ln \{M_G.G_{Ref}[k - 1]\} \quad (XIV).$$

Die beiden Gleichungen XIII und XIV ergeben die Gleichung:

$$G_{Ref}[k - 1] = G[k - 1].\{e^{M_d.\{d[k] - d_{Ref}[k]\}} - 1\} \quad (XV).$$

Falls also beim diskreten Wert $G[k-1]$ des Verstärkungsfaktors der Wert $d[k]$ des Dämpfungsfaktors des Regelkreises 19 gemessen wurde, muss der diskrete Wert $G[k-1]$ des Verstärkungsfaktors um den Wert

$$\delta G[k] = G_{Ref}[k] - G[k] = G[k - 1].\{e^{M_d.\{d[k] - d_{Ref}[k]\}} - 1\} \quad (XVI)$$

verstellt werden, damit der diskrete Schätzwert $d[k]$ des Dämpfungsfaktors den gerade geltenden diskreten Wert $d_{Ref}[k]$ seines Sollwertes erreicht.

Für kleine Werte von $\{d[k] - d_{Ref}[k]\}$ ergibt die Gleichung XVI durch die Entwicklung der Exponentialfunktion in eine Taylorreihe und unter Vernachlässigung der Glieder höherer Ordnung die Gleichung:

$$\delta G[k] = G[k - 1].M_d.\{d[k] - d_{Ref}[k]\} \quad (XVII).$$

Der Wert der Konstanten $M_d$ bleibt während des Regelvorgangs unbekannt. Wegen der Monotonie der durch die Gleichung XIII dargestellten Kennlinie, kann jedoch die Konstante $M_d$ durch eine beliebige genügend kleine Konstante $M$ ersetzt werden, so dass die Gleichung

$$\delta G[k] = G[k - 1].M.\{d[k] - d_{Ref}[k]\} \quad (XVIII)$$

gilt.

Der diskrete Wert $G[k]$ des Verstärkungsfaktors wird dann jeweils im Funktionsblock 5 mittels der Gleichung

$$G[k] = G[k - 1] + \delta G[k] = G[k - 1]\{1 + M.d[k] - M.d_{Ref}[k]\} \quad (XIX)$$

ermittelt.

Wenn die diskreten Werte $y[k]$ des Istwertes $y[t]$ der Regelgrösse oder die diskreten Werte $y'[k]$ oder $y''[k]$

der ersten bzw. zweiten zeitlichen Ableitung des Istwertes y[t] der Regelgrösse sich zwischen den zwei Zeitpunkten $t_2=k$ und $t_1=k-1$ zu langsam ändern, dann kann es bei der Berechnung mittels der Gleichungen (III) bis (V) zur Auslöschung von signifikanten Dezimalstellen kommen. Um dies zu vermeiden, ist nach der Berechnung der diskreten Schätzwerte y'[k], y''[k] und y'''[k] jeweils im Funktionsblock 9 die Anzahl Dezimalstellen der ermittelten diskreten Schätzwerte y'[k], y''[k] und y'''[k] der drei ersten zeitlichen Ableitungen des Istwertes y[t] der Regelgrösse zu kontrollieren und die Ermittlung des diskreten Wertes G[k] des Verstärkungsfaktors, d. h. den Betrieb des Funktionsblocks 5, nur dann freizugeben, wenn die Anzahl Dezimalstellen eine vorgegebene Anzahl, z. B. drei, erreicht, da ansonsten die Berechnung der Schätzwerte d[k] und T[k] des Dämpfungsfaktors und der Zeitkonstante des Regelkreises 19 ungenau und nicht akzeptierbar ist.

Ausgehend von den ermittelten diskreten Schätzwerten d[k], T[k], y'(k), y''(k) und y'''[k] des Dämpfungsfaktors, der Zeitkonstante und der drei ersten zeitlichen Ableitungen des Istwertes der Regelgrösse wird ausserdem im Funktionsblock 3 jeweils ein zugehöriger diskreter Schätzwert $\Phi$[k] eines relativen Approximationsfehlers ermittelt, welcher dann dem Freigabe-Funktionsblock 4 zugeleitet wird. Die Ermittlung des diskreten Wertes G[k] des Verstärkungsfaktors, d. h. der Betrieb des Funktionsblocks 5, wird jeweils nur freigegeben, wenn der ermittelte diskrete Schätzwert $\Phi$[k] des relativen Approximationsfehlers einen vorgegebenen Wert, z. B. 1%, nicht überschreitet, da ansonsten die ermittelten diskreten Schätzwerte T[k] und d[k] unzuverlässig und nicht akzeptierbar sind.

Der diskrete Schätzwert $\Phi$[k] des relativen Approximationsfehlers wird im Funktionsblock 3 jeweils mittels der Gleichung

$$\Phi[k] = \{T^2[k-1].y'''[k] + 2.d[k-1].T[k-1].y''[k] + y'[k]\}/y'[k]$$

ermittelt, wobei T[k-1] und d[k-1] vorherige zum Zeitpunkt $t_1=k-1$ ermittelte diskrete Schätzwerte der Zeitkonstante beziehungsweise des Dämpfungsfaktors des Regelkreises 19 sind, die zuletzt bisher, d. h. bis zum Zeitpunkt $t_2=k$, gegolten haben.

In praktischen Anwendungen ist der Bereich der am Ausgang des Reglers 13 anstehenden Stellgrösse begrenzt. Falls die Stellgrösse, z. B. durch einen Sollwertsprung, über längere Zeit in ihrem oberen oder unteren Grenzwert-Sättigungsbereich verweilt, entspricht die Regelgrösse am Ausgang der Regelstrecke 14 nicht mehr der Sprungantwort des geschlossenen linearen Regelkreises 19, was die Voraussetzung für die richtige Schätzung der Werte des Dämpfungsfaktors ist. In diesem Fall muss die Selbstanpassung unterbrochen werden. Nach dem Austritt der Stellgrösse aus dem Grenzwert-Sättigungsbereich braucht der Regelkreis 19 eine gewisse Zeit, bevor die ermittelten Schätzwerte des Dämpfungsfaktors und der Zeitkonstante wieder akzeptierbar sind. Die Selbstanpassung darf daher erst nach Ablauf dieser Zeit freigegeben werden. Diese Zeit hängt von der Arbeitsgeschwindigkeit des geschlossenen Regelkreises 19 und damit letztlich vom diskreten Schätzwert T[k] der Zeitkonstante ab.

Mittels des Überwachungs-Funktionsblocks 7 wird jeder am Ausgang des Reglers 13 erscheinende diskrete Wert u[k] der Stellgrösse fortlaufend überwacht und, falls er einen oberen oder unteren Sättigungsgrenzwert erreicht und während einer Dauer beibehält, die grösser als der diskrete Schätzwert T[k] der Zeitkonstante des Regelkreises 19 ist, wird die Ermittlung des diskreten Wertes G[k] des Verstärkungsfaktors, d. h. der Betrieb des Funktionsblocks 5, mit Hilfe des Freigabe-Funktionsblocks 8 gesperrt und erst wieder freigegeben, nachdem der diskrete Wert u[k] der Stellgrösse den oberen beziehungsweise unteren Grenzwert-Sättigungsbereich mindestens während einer Dauer wieder verlassen hat, die gleich dem diskreten Schätzwert T[k] der Zeitkonstante ist. Der Funktionsblock 8 entscheidet dabei, ob und wie lange nach Austritt des diskreten Wertes u[k] der Stellgrösse aus dem Sättigungsbereich die Selbstanpassung gesperrt werden soll bzw. gesperrt bleiben soll.

Nur wenn keiner der drei Freigabe-Funktionsblöcke 4, 8 oder 9 den Betrieb des Funktionsblocks 5 sperrt, wird ein neuer diskreter Wert G[k] des Verstärkungsfaktors berechnet und an den Regler 13 weitergeleitet.

Der in der Fig. 1 dargestellte geschlossene Adaptations-Regelkreis verwirklicht eine nichtlineare vermaschte Zweigrössenregelung, wobei einerseits diskrete Werte y[k] des Istwertes y[t] der Regelgrösse mittels des Regelkreises 19 und anderseits diskrete Werte d[k] des Dämpfungsfaktors des Regelkreises mittels des Adaptations-Regelkreises geregelt werden. Der Regelkreis 19 ist dabei im Rückkopplungszweig des Adaptations-Regelkreises angeordnet, wobei die Anpass-Schaltung 11 des letzteren eine zusätzliche Rückführung für den Regelkreis 19 darstellt.

Um eine gute Stabilität der vermaschten Zweigrössenregelung zu erzielen, sollte einer der beiden geschlossenen Regelkreise bedeutend langsamer arbeiten als der andere. Da der Regelkreis 19 von Natur aus möglichst schnell sein soll, sollte die Arbeitsgeschwindigkeit des Adaptations-Regelkreises ein Bruchteil der Arbeitsgeschwindigkeit des Regelkreises 19 sein.

Die letztere ist bekanntlich umgekehrt proportional der Zeitkonstante des Regelkreises 19.

Die Arbeitsgeschwindigkeit des Adaptations-Regelkreises kann der Schnelligkeit des Regelkreises 19 angepasst werden, indem in der Gleichung XIX der Wert der Konstante M umgekehrt proportional einem Vielfachen r.T[k] des diskreten Schätzwertes T[k] der Zeitkonstante des Regelkreises 19 gewählt wird, wobei r selber eine Konstante ist, so dass:

$$G[k] = G[k-1]\{1 + d[k]/(r.T[k]) - d_{Ref}[k]/(r.T[k])\} \quad (XX)$$

Durch die Verwendung der Gleichung XX werden Schwankungen der diskreten Schätzwerte d[k] gefiltert, so dass in diesem Fall bei einem genügend grossem Wert der Konstante r keine zusätzliche Filterung mittels des Filters 15 oder der Filter 16 bis 18 erforderlich ist.

Falls der Regler 13 einen durch eine Nachstellzeit gekennzeichneten Integralteil besitzt, d. h. wenn er z. B. ein PI- oder ein PID-Regler ist, dann müssen auch diskrete Werte $T_n[k]$ der Nachstellzeit im Funktionsblock 6, der in diesem Fall notwendigerweise immer vorhanden ist, fortlaufend neu selbstangepasst werden. Dies geschieht, indem ausgehend vom ermittelten diskreten Schätzwert T[k] der Zeitkonstante des Regelkreises 19 jeweils der diskrete Wert $T_n[k]$ der Nachstellzeit ermittelt wird, falls die Ermittlung des diskreten Wertes G[k] des Verstärkungsfaktors freigegeben ist. D. h. der Betrieb des Funktionsblocks 6 wird gleichzeitig mit demjenigen des Funktionsblocks 5 durch die Ausgangssignale der Funktionsblöcke 4, 8 und 9 freigegeben bzw. gesperrt. Der neu ermittelte diskrete Wert $T_n[k]$ der Nachstellzeit wird dann dem Regler 13 zugeführt zwecks Neueinstellung des Wertes von dessen Nachstellzeit.

Die Nachstellzeit ist bei einem schwingenden Regelvorgang annähernd gleich einer Schwingungsperiode, deren kleinster diskreter Wert $T_e[k]$ sich bei d[k] = 0 ergibt und gleich $2\pi.T[k]$ ist. Prinzipiell kann somit $T_n[k] = T_e[k] = 2\pi.T[k]$ gesetzt werden. Da die Schätzung von T[k] jedoch eine ähnliche Streuung aufweist wie diejenige von d[k], ist es zweckmässig, den diskreten Wert $T_n[k]$ der Nachstellzeit jeweils mittels der Gleichung

$$T_n[k] = T_n[k-1] + 0{,}1.\{2\pi.T[k-1] - T_n[k-1]\} \quad (XXI).$$

zu ermitteln, wobei T[k-1] und $T_n[k-1]$ vorherige, d. h. zum Zeitpunkt $t_1=k-1$ ermittelte diskrete Werte der Zeitkonstante des Regelkreises 19 beziehungsweise der Nachstellzeit sind, die zuletzt bisher, d. h. bis zum Zeitpunkt $t_2=k$, gegolten haben.

Falls der Regler 13 ausserdem noch einen durch eine Vorhaltezeit gekennzeichneten Differentialanteil besitzt, d. h. wenn er ein PID-Regler ist, dann müssen auch diskrete Werte $T_v[k]$ der Vorhaltezeit im Funktionsblock 6 des Adaptations-Regelkreises fortlaufend neu selbstangepasst werden. Dies geschieht, indem ausgehend vom ermittelten diskreten Wert $T_n[k]$ der Nachstellzeit des Reglers 13 der diskrete Wert $T_v[k]$ der Vorhaltezeit jeweils mittels der Gleichung $T_v[k] = T_n[k]/4$ ermittelt wird, falls die Ermittlung des diskreten Wertes G[k] des Verstärkungsfaktors freigegeben ist, wobei der so ermittelte diskrete Wert $T_v[k]$ der Vorhaltezeit dann dem Regler 13 zugeführt wird zwecks Neueinstellung des Wertes von dessen Vorhaltezeit. Ausserdem besitzt der Regler 13 in diesem Fall einen vierten Parametereingang zwecks Zuführung des im Funktionsblock 1 ermittelten und gegebenenfalls im Filter 16 gefilterten diskreten Wertes y'[k] der ersten zeitlichen Ableitung des Istwertes y[t] der Regelgrösse. Dies hat den Vorteil, dass die möglicherweise notwendige Filterung der diskreten Werte y'[k] bereits im Filter 16 durchgeführt wird und im Regler 13 selbst nicht mehr wiederholt werden muss.

## Patentansprüche

1.   Verfahren zur automatischen Selbstanpassung von Parametern eines Reglers (13), der in einem Regelkreis (19) enthalten ist, welcher diskrete Werte (y[k]) eines Istwertes (y[t]) einer Regelgrösse erzeugt, mit mindestens einem Dämpfungsfaktor des Regelkreises (19) als Gütekriterium, dadurch gekennzeichnet, dass ausgehend von jedem diskreten Wert (y[k]) des Istwertes (y[t]) der Regelgrösse jeweils ein diskreter Schätzwert y'[k] einer ersten zeitlichen Ableitung des Istwertes (y[t]) der Regelgrösse mittels der Gleichung y'[k] = y[k] - y[k-1], ein diskreter Schätzwert y''[k] einer zweiten zeitlichen Ableitung des Istwertes (y[t]) der Regelgrösse mittels der Gleichung y''[k] = y'[k] - y'[k-1] und ein diskreter Schätzwert y'''[k] einer dritten zeitlichen Ableitung des Istwertes (y[t]) der Regelgrösse mittels der Gleichung y'''[k] = y''[k] - y''[k-1] ermittelt werden, dass mittels der diskreten Schätzwerte (y'[k], y''[k], y'''[k]) der drei ersten zeitlichen Ableitungen des Istwertes (y[t]) der Regelgrösse jeweils ein diskreter Schätzwert d[k] des Dämpfungsfaktors des Regelkreises (19) mittels der Gleichung $d[k] = -D_2[k]/\{2.T[k].D_s[k]\}$ und ein diskreter Schätzwert T[k] einer Zeitkonstante des Regelkreises (19) mittels der Gleichung $T[k] = \{-D_1[k]/D_s[k]\}^{1/2}$ ermittelt werden, wobei $D_1[k] = y'[k-1].y''[k] - y''[k-1].y'[k]$,
$D_2[k] = y'''[k-1].y'[k] - y'[k-1].y'''[k]$,
$D_s[k] = y'''[k-1].y''[k] - y''[k-1].y'''[k]$,
y[k] ein gerade neu gemessener diskreter Wert und y[k-1] ein davor zuletzt gemessener diskreter Wert des Istwertes (y[t]) der Regelgrösse ist, die beide zeitlich um eine Zeiteinheit auseinanderliegen, und y'[k-1], y''[k-1] und y'''[k-1] vorherige diskrete Schätzwerte der drei ersten zeitlichen Ableitungen des Istwertes (y[t]) der Regelgrösse sind, die zuletzt bisher gegolten haben, dass der diskrete Schätzwert d[k] des Dämpfungsfaktors des Regelkreises (19) als Istwert jeweils mit einem diskreten Wert $d_{Ref}[k]$ eines Sollwertes des Dämpfungsfaktors des Regelkreises (19) verglichen wird zwecks Ermittlung eines diskreten Schätzwertes $d_{Ref}[k] - d[k]$ einer Sollwert/Istwert-Differenz des Dämpfungsfaktors, dass ausgehend vom ermittelten diskreten Schätzwert $d_{Ref}[k] - d[k]$ der Sollwert/Istwert-Differenz jeweils ein diskreter Wert $G[k]$ eines Verstärkungsfaktors, der dem Regler (13) zugeführt wird, mittels der Gleichung $G[k] = G[k-1]\{1 + M.d[k] - M.d_{Ref}[k]\}$ ermittelt wird, wobei M eine Konstante, $d_{Ref}[k]$ ein gerade geltender diskreter Wert des Sollwertes des Dämpfungsfaktors des Regelkreises (19) und $G[k-1]$ ein vorheriger diskreter Wert des Verstärkungsfaktors ist, der zuletzt bisher gegolten hat, und dass der Wert eines Reglerverstärkungsfaktors des Reglers (13) jeweils gleich dem ermittelten diskreten Wert $G[k]$ des Verstärkungsfaktors gesetzt wird.

2. Verfahren nach Anspruch 1, dadurch gekennzeichnet, dass die Konstante M umgekehrt proportional einem Vielfachen $(r.T[k])$ des diskreten Schätzwertes $(T[k])$ der Zeitkonstante des Regelkreises (19) ist.

3. Verfahren nach Anspruch 1 oder 2, dadurch gekennzeichnet, dass die Anzahl Dezimalstellen der ermittelten diskreten Schätzwerte $(y'[k], y''[k], y'''[k])$ der drei ersten zeitlichen Ableitungen des Istwertes $(y[t])$ der Regelgrösse jeweils kontrolliert wird und die Ermittlung des diskreten Wertes $(G[k])$ des Verstärkungsfaktors nur freigegeben wird, wenn die Anzahl Dezimalstellen eine vorgegebene Anzahl erreicht.

4. Verfahren nach einem der Ansprüche 1 bis 3, dadurch gekennzeichnet, dass ausgehend von den ermittelten diskreten Schätzwerten $(d[k], T[k], y'[k], y''[k], y'''[k]))$ des Dämpfungsfaktors, der Zeitkonstante und der drei ersten zeitlichen Ableitungen des Istwertes $(y[t])$ der Regelgrösse jeweils ein diskreter Schätzwert $(\Phi[k])$ eines relativen Approximationsfehlers ermittelt wird und dass die Ermittlung des diskreten Wertes $(G[k])$ des Verstärkungsfaktors jeweils nur freigegeben wird, wenn der ermittelte diskrete Schätzwert $(\Phi[k])$ des relativen Approximationsfehlers einen vorgegebenen Wert (z. B. 1%) nicht überschreitet.

5. Verfahren nach Anspruch 4, dadurch gekennzeichnet, dass ein diskreter Schätzwert $\Phi[k]$ des relativen Approximationsfehlers jeweils mittels der Gleichung
$$\Phi[k] = \{T^2[k - 1].y'''[k] + 2.d[k - 1].T[k - 1].y''[k] + y'[k]\}/y'[k]$$
ermittelt wird, wobei $T[k-1]$ und $d[k-1]$ vorherige diskrete Schätzwerte der Zeitkonstante beziehungsweise des Dämpfungsfaktors des Regelkreises (19) sind, die zuletzt bisher gegolten haben.

6. Verfahren nach einem der Ansprüche 1 bis 5, dadurch gekennzeichnet, dass jeder am Ausgang des Reglers (13) erscheinende diskrete Wert $(u[k])$ einer Stellgrösse fortlaufend überwacht wird und dass, falls er in einen oberen oder unteren Grenzwert-Sättigungsbereich während einer Dauer enthalten ist, die grösser als der diskrete Schätzwert $(T[k])$ der Zeitkonstante des Regelkreises (19) ist, die Ermittlung des diskreten Wertes $(G[k])$ des Verstärkungsfaktors gesperrt und erst wieder freigegeben wird, nachdem der diskrete Wert $(u[k])$ der Stellgrösse den oberen beziehungsweise unteren Grenzwert-Sättigungsbereich mindestens wähend einer Dauer verlassen hat, die gleich dem diskreten Schätzwert $(T[k])$ der Zeitkonstante ist.

7. Verfahren nach einem der Ansprüche 1 bis 6, dadurch gekennzeichnet, dass der Regler (13) einen durch eine Nachstellzeit gekennzeichneten Integralteil besitzt, dass ausgehend vom ermittelten diskreten Schätzwert $(T[k])$ der Zeitkonstante des Regelkreises (19) jeweils ein diskreter Wert $(T_n[k])$ der Nachstellzeit ermittelt wird, falls die Ermittlung des diskreten Wertes $(G[k])$ des Verstärkungsfaktors freigegeben ist, und dass der ermittelte diskrete Wert $(T_n[k])$ der Nachstellzeit dem Regler (13) zugeführt wird zwecks Neueinstellung des Wertes von dessen Nachstellzeit.

8. Verfahren nach Anspruch 7, dadurch gekennzeichnet, dass ein diskreter Wert $T_n[k]$ der Nachstellzeit jeweils mittels der Gleichung $T_n[k] = T_n[k-1] + 0,1.\{2\pi.T[k - 1] - T_n[k-1]\}$ ermittelt wird, wobei $T[k-1]$ und $T_n[k-1]$ vorherige diskrete Werte der Zeitkonstante des Regelkreises (19) beziehungsweise der Nachstellzeit sind, die zuletzt bisher gegolten haben.

9. Verfahren nach Anspruch 7 oder 8, dadurch gekennzeichnet, dass der Regler (13) einen durch eine Vorhaltezeit gekennzeichneten Differentialanteil besitzt, dass ausgehend vom ermittelten diskreten Wert $(T_n[k])$ der Nachstellzeit ein diskreter Wert $(T_v[k])$ der Vorhaltezeit ermittelt wird, falls die Ermittlung des diskreten Wertes $(G[k])$ des Verstärkungsfaktors freigegeben ist, und dass der ermittelte diskrete Wert $(T_v[k])$ der Vorhaltezeit dem Regler (13) zugeführt wird zwecks Neueinstellung des Wertes von dessen Vorhaltezeit.

10. Verfahren nach Anspruch 9, dadurch gekennzeichnet, dass ein diskreter Wert $T_v[k]$ der Vorhaltezeit je-

weils mittels der Gleichung $T_v[k] = T_n[k]/4$ ermittelt wird, wobei $T_n[k]$ der diskrete Wert der Nachstellzeit des Reglers (13) ist.

11. Verfahren nach einem der Ansprüche 1 bis 10, dadurch gekennzeichnet, dass die diskreten Werte (y[k]) des Istwertes (y[t]) der Regelgrösse in einem Filter (15) gefiltert werden, bevor sie weiterverarbeitet werden.

12. Verfahren nach einem der Ansprüche 1 bis 10, dadurch gekennzeichnet, dass die diskreten Schätzwerte (y'[k], y''[k], y'''[k]) der drei zeitlichen Ableitungen des Istwertes (y[t]) der Regelgrösse in je einem Filter (16, 17, 18) gefiltert werden, bevor sie weiterverarbeitet werden.

## Claims

1. A method of automatic self-adaptation of parameters of a controller (13) which is included in a control circuit (19) which produces discrete values (y[k]) of an actual value (y[t]) of a control variable, with at least one attenuation factor of the control circuit (19) as a quality criterion, characterised in that starting from each discrete value (y[k]) of the actual value (y[t]) of the control variable, a discrete estimated value $y'[k]$ of a first time derivation of the actual value (y[t]) of the control variable is ascertained by means of the equation $y'[k] = y[k] - y[k-1]$, a discrete estimated value $y''[k]$ of a second time derivation of the actual value (y[t]) of the control variable is ascertained by means of the equation $y''[k] = y'[k] - y'[k-1]$ and a discrete estimated value $y'''[k]$ of a third time derivation of the actual value (y[t]) of the control variable is ascertained by means of the equation $y'''[k] = y''[k] - y''[k-1]$, that by means of the discrete estimated values (y'[k], y''[k], y'''[k]) of the first three time derivations of the actual value (y[t]) of the control variable, a discrete estimated value d[k] of the attenuation factor of the control circuit (19) is ascertained by means of the equation $d[k] = -D_2[k]/\{2.T[k].D_s[k]\}$ and a discrete estimated value T[k] of a time constant of the control circuit (19) is ascertained by means of the equation $T[k] = \{-D_1[k]/D_s[k]\}^{1/2}$, wherein $D_1[k] = y'[k-1].y''[k] - y''[k-1].y'[k]$, $D_2[k] = y'''[k-1].y'[k] - y'[k-1].y'''[k]$, $D_s[k] = y'''[k-1].y''[k] - y''[k-1].y'''[k]$, y[k] is a just freshly meaasured discrete value and y[k-1] is a discrete value, as measured last therebefore, of the actual value (y[t]) of the control variable, which are both separated in respect of time by a unit of time, and y'[k-1], y''[k-1] and y'''[k-1] are previously discrete estimated values of the first three time derivations of the actual value (y[t]) of the control variable, which have previously last applied, that the discrete estimated value d[k] of the attenuation factor of the control circuit (19) is respectively compared as an actual value to a discrete value $d_{Ref}[k]$ of a reference value of the attenuation factor of the control circuit (19) for the purposes of ascertaining a discrete estimated value $d_{Ref}[k] - d[k]$ of a reference value/actual value difference of the attenuation factor, that, starting from the ascertained discrete estimated value $d_{Ref}[k] - d[k]$ of the reference value/actual value difference a respective discrete value G[k] of an amplification factor which is fed to the controller (13) is ascertained by means of the equation $G[k] = G[k-1]\{1 + M.d[k] - M.d_{Ref}[k]\}$, wherein M is a constant, $d_{Ref}[k]$ is a discrete value, which just applies, of the reference value of the attenuation factor of the control circuit (19) and G[k-1] is a previous discrete value of the amplification factor which previously last applied and that the value of a controller amplification factor of the controller (13) is respectively set equal to the ascertained discrete value G[k] of the amplification factor.

2. A method according to claim 1 characterised in that the constant M is inversely proportional to a multiple (r.T[k]) of the discrete estimated value (T[k]) of the time constant of the control circuit (19).

3. A method according to claim 1 or claim 2 characterised in that the number of decimal places of the ascertained discrete estimated values (y'[k], y''[k], y'''[k]) of the first three time derivations of the actual value (y[t]) of the control variable is respectively monitored and the operation of ascertaining the discrete value (G[k]) of the amplification factor is only enabled when the number of decimal places reaches a predetermined number.

4. A method according to one of claims 1 to 3 characterised in that, starting from the ascertained discrete estimated values (d[k], T[k], y'[k], y''[k], y'''[k])) of the attenuation factor, the time constant and the first three time derivations of the actual value (y[t]) of the control variable a respective discrete estimated value (Φ[k]) of a relative approximation error is ascertained and that the operation of ascertaining the discrete value (G[k]) of the amplification factor is only enabled whenever the ascertained discrete estimated value (Φ[k]) of the relative approximation error does not exceed a predetermined value (for example 1%).

**5.** A method according to claim 4 characterised in that a discrete estimated value ($\Phi[k]$) of the relative approximation error is respectively ascertained by means of the equation

$$\Phi[k] = \{T^2[k-1].y'''[k] + 2.d[k-1].T[k-1].y''[k] + y'[k]\} / y'[k]$$

wherein $T[k-1]$ and $d[k-1]$ are previous discrete estimated values of the time constant and the attenuation factor of the control circuit (19) respectively, which have last previously applied.

**6.** A method according to one of claims 1 to 5 characterised in that each discrete value ($u[k]$) of an adjustment variable, which appears at the output of the controller (13), is continuously monitored and that, if it is contained in an upper or lower limit value saturation range during a period which is greater than the discrete estimated value ($T[k]$) of the time constant of the control circuit (19), the operation of ascertaining the discrete value ($G[k]$) of the amplification factor is disabled and is only enabled again after the discrete value ($u[k]$) of the adjustment variable has left the upper or lower limit value saturation range respectively at least during a period which is equal to the discrete estimated value ($T[k]$) of the time constant.

**7.** A method according to one of claims 1 to 6 characterised in that the controller (13) has an integral portion which is characterised by an integral-action time, that starting from the ascertained discrete estimated value ($T[k]$) of the time constant of the control circuit (19) a respective discrete value ($T_n[k]$) of the integral-action time is ascertained if the operation of ascertaining the discrete value ($G[k]$) of the amplification factor is enabled, and that the ascertained discrete values ($T_n[k]$) of the integral-action time is fed to the controller (13) for the purposes of resetting the value of the integral-action time thereof.

**8.** A method according to claim 7 characterised in that a discrete value $T_n[k]$ of the integral-action time is respectively ascertained by means of the equation $T_n[k] = T_n[k-1] + 0.1.\{2\pi.T[k-1] - T_n[k-1]\}$, wherein $T[k-1]$ and $T_n[k-1]$ are previous discrete values of the time constant of the control circuit (19) and the integral-action time respectively, which have last previously applied.

**9.** A method according to claim 7 or claim 8 characterised in that the controller (13) has a differential component which is characterised by a derivative-action time, that starting from the ascertained discrete value ($T_n[k]$) of the integral-action time a discrete value ($T_v[k]$) of the differential-action time is ascertained if the operation of ascertaining the discrete value ($G[k]$) of the amplification factor is enabled, and that the ascertained discrete value ($T_v[k]$) of the derivative-action time is fed to the controller (13) for the purposes of resetting the value of the derivative-action time thereof.

**10.** A method according to claim 9 characterised in that a discrete value $T_v[k]$ of the derivative-action time is respectively ascertained by means of the equation $T_v[k] = T_n[k]/4$, wherein $T_n[k]$ is the discrete value of the integral-action time of the controller (13).

**11.** A method according to one of claims 1 to 10 characterised in that the discrete values ($y[k]$) of the actual value ($y[t]$) of the control variable is filtered in a filter (15) before it is subjected to further processing.

**12.** A method according to one of claims 1 to 10 characterised in that the discrete estimated values ($y'[k]$, $y''[k]$, $y'''[k]$) of the three time derivations of the actual value ($y[t]$) of the control variable are filtered in a respective filter (16, 17, 18) before they are subjected to further processing.

## Revendications

**1.** Procédé d'adaptation automatique de paramètres d'un régulateur (13), qui est contenu dans un circuit de régulation (19), qui produit des valeurs discrètes ($y[k]$) d'une valeur réelle ($y[t]$) d'une grandeur de régulation, avec au moins un facteur d'amortissement du circuit de régulation (19) en tant que critère de qualité, caractérisé en ce qu'à partir de chaque valeur discrète ($y[k]$) de la valeur réelle ($y[t]$) de la grandeur de régulation, on détermine respectivement une valeur estimée discrète ($y'[k]$) d'une dérivée première dans le temps de la valeur réelle ($y[t]$) de la grandeur de régulation au moyen de la relation $y'[k] = y[k] - y[k-1]$, qu'à partir d'une valeur estimée discrète ($y''[k]$) d'une dérivée seconde dans le temps de la valeur réelle ($y[t]$) de la grandeur de régulation au moyen de la relation $y''[k] = y'[k] - y'[k-1]$, on détermine respectivement une valeur estimée discrète $y'''[k]$ d'une dérivée troisième dans le temps de la valeur réelle ($y[t]$) de la grandeur de régulation au moyen de la relation $y'''[k] = y''[k] - y''[k-1]$, qu'au moyen des valeurs estimées discrètes ($y'[k]$, $y''[k]$, $y'''[k]$) des trois premières dérivées dans le temps de la valeur ($y[t]$) de la grandeur de régulation, on détermine respectivement une valeur estimée discrète $d[k]$ du faccteur d'amortissement du circuit de régulation (19) au moyen de la relation $d[k] = -D_2[k]/\{2.T[k].D_S[k]\}$, et une valeur estimée discrète $T[k]$ d'une constante de temps du circuit de régulation (19) au moyen de la relation $T[k] = \{-D_1[k]/D_S[k]\}^{1/2}$ avec $D_1[k] = y'[k].y''[k] - y''[k-1].y'[k]$, $D_2[k] = y'''[k].y'[k] - y'[k-1].y'''[k]$, $D_3[k] = y''[k].y''[k] - y''[k-1].y'''[k]$, $y[k]$ étant une valeur discrète, qui vient précisément d'être mesurée, et $y[k-1]$ étant une valeur discrète mesurée juste avant la précédente, de la valeur réelle $(y[t])$ de la grandeur de régulation, ces deux valeurs étant séparées dans le temps, d'une unité de temps, et $y'[k-1]$, $y''[k-1]$ et $y'''[k-1]$ étant des valeurs estimées discrètes précédentes des trois premières dérivées dans le temps de la valeur $(y[t])$ de la grandeur de régulation, qui était valable jusqu'en dernier lieu, et la valeur estimée discrète $d[k]$ du facteur d'amortissement du circuit de régulation (19) en tant que valeur réelle est comparée respectivement à une valeur discrète $D_{Ref}[k]$ d'une valeur de consigne du facteur d'amortissement du circuit de régulation (19) pour la détermination d'une valeur estimée discrète $D_{Ref}[k] - d[k]$ d'une différence valeur de consigne/valeur réelle du facteur d'amortisseur, à partir de la valeur estimée discrète déterminée $D_{Ref}[k] - d[k]$ de la différence valeur de consigne/valeur réelle on détermine respectivement une valeur discrète $G[k]$ d'un facteur d'amplification, qui est envoyé au régulateur (13), au moyen de la relation $G[k] = G[k-1]\{1 + M.d[k] - M.d_{Ref}[k]\}$, M étant une constante, $d_{Ref}[k]$ une valeur discrète précisément valable de la valeur de consigne du facteur d'amortissement du circuit de régulation (19), et $G[k-1]$ une valeur discrète précédente du facteur d'amplification, qui était valable jusqu'en dernier lieu, et qu'on règle la valeur d'un facteur d'amplification du régulateur (13) de manière qu'elle soit respectivement égale à la valeur discrète déterminée $G[k]$ du facteur d'amplification.

2. Procédé selon la revendication 1, caractérisé en ce que la constante N est inversement proportionnelle à un multiple $(r.T[k])$ de la valeur estimée discrète $(T[k])$ de la constante de temps du circuit de régulation (19).

3. Procédé selon la revendication 1 ou 2, caractérisé en ce que le nombre de chiffres décimaux des valeurs estimées discrètes déterminées $(y'[]k, y''[k], y'''[k])$ des trois premières dérivées dans le temps de la valeur $(y[t])$ de la grandeur de régulation est respectivement contrôlé et que la détermination de la valeur discrète $(G[k])$ du facteur d'amplification n'est permise que lorsque le nombre de chiffres décimaux atteint une valeur prédéterminée.

4. Procédé selon l'une des revendications 1 à 3, caractérisé en ce qu'à partir des valeurs estimées discrètes déterminées $(d[k], T[k], y'[k], y''[k], y'''[k])$ du facteur d'amortissement, de la constante de temps et des trois premières dérivées dans le temps de la valeur réelle $(y[t])$ de la grandeur de régulation, on détermine respectivement une valeur estimée discrète $(\Phi[k])$ d'une erreur d'approximation relative et que la détermination de la valeur discrète $(G[k])$ du facteur d'amplification est autorisée respectivement seulement lorsque la valeur estimée discrète déterminée $(\Phi[k])$ de l'erreur d'approximation relative ne dépasse pas une valeur prédéterminée (par exemple 1 %).

5. Procédé selon la revendication 4, caractérisé en ce qu'une valeur estimée discrète $(\Phi[k])$ de l'erreur d'approximation relative est déterminée respectivement au moyen de la relation
$$\Phi[k] = \{T^2[k - 1].y'''[k] + 2.d[k - 1].T[k - 1].y''[k] + y'[k]\}/y'[k],$$
$T[k-1]$ et $d[k-1]$ étant des valeurs estimées discrètes précédentes de la constante de temps ou du facteur d'amortissement du circuit de régulation (19), qui était valable jusqu'en dernier lieu.

6. Procédé selon l'une des revendications 1 à 5, caractérisé en ce que chaque valeur discrète $(u[k])$, qui apparaît à la sortie du régulateur (13), et d'une grandeur de régulation est contrôlée en permanence et que, dans le cas où cette valeur est contenue dans une zone supérieure ou inférieure de saturation de valeur limite pendant une durée, qui est supérieure à la valeur estimée discrète $(T[k])$ de la constante de temps du circuit de régulation (19), la détermination de la valeur discrète $(G[k])$ du facteur d'amplification est bloquée et n'est à nouveau autorisée que lorsque la valeur discrète $(u[k])$ de la grandeur de régulation a quitté la zone supérieure ou inférieure de saturation de valeur limite pendant une durée qui est égale à la valeur estimée discrète $(T[k])$ de la constante de temps.

7. Procédé selon l'une des revendications 1 à 6, caractérisé en ce que le régulateur (13) possède une partie intégrale, caractérisé par une durée d'ajustement, que respectivement une valeur discrète $(T_n[k])$ de la durée d'ajustement est déterminée à partir de la valeur estimée discrète déterminée $(T[k])$ de la constante de temps du circuit de régulation (19), dans le cas où la détermination de la valeur discrète $(G[k])$ du facteur d'amplification est autorisée, et que la valeur discrète déterminée $(T_n[k])$ de la durée d'ajustement est envoyée au régulateur (13), en vue d'un nouveau réglage de la valeur par cette durée d'ajustement.

8. Procédé selon la revendication 7, caractérisé en ce qu'une valeur discrète ($T_n[k]$) de la durée d'ajustement est déterminée respectivement au moyen de la relation $T_n[k] = T_n[k-1] + 0,1.[2\pi.T[k-1] - T_n[k-1]]$, $T[k-1]$ et $T_n[k-1]$ étant des valeurs discrètes précédentes de la constante de temps du circuit de régulation (19) ou de la durée d'ajustement, qui était valable jusqu'alors en dernier lieu.

9. Procédé selon la revendication 7 ou 8, caractérisé en ce que le régulateur (13) possède une partie différentielle, caractérisé par une durée de dérivation, qu'une valeur discrète ($T_v[k]$) de la durée de dérivation est déterminée à partir de la valeur discrète déterminée ($T_n[k]$) de la durée d'ajustement, dans le cas où la détermination de la valeur discrète ($G[k]$) du facteur d'amplification est autorisée, et que la valeur discrète déterminée ($T_v[k]$) de la durée de dérivation est envoyée au régulateur (13) en vue d'un nouveau de réglage de la valeur par la durée de dérivation du régulateur.

10. Procédé selon la revendication 9, caractérisé en ce qu'une valeur discrète ($T_v[k]$) de la durée de dérivation est déterminée respectivement au moyen de la relation $T_v[k] = T_n[k]/4$, $T_n[k]$ étant la valeur discrète de la durée d'ajustement du régulateur (13).

11. Procédé selon l'une des revendications 1 à 10, caractérisé en ce que la valeur discrète ($y[k]$) et la valeur réelle ($y[t]$) de la grandeur de régulation sont filtrées dans un filtre (15) avant la poursuite de leur traitement.

12. Procédé selon l'une des revendications 1 à 10, caractérisé en ce que les valeurs estimées discrètes ($y'[k]$, $y''[k]$, $y'''[k]$) des trois dérivées dans le temps de la valeur réelle ($y[t]$) de la grandeur de régulation sont filtrées dans des filtres respectifs (16, 17, 18) avant la poursuite de leur traitement.

# Fig. 1

# Fig. 2

$$y(t) \quad K\left\{1+\frac{1}{\sqrt{1-d^2[k]}} \cdot e^{-\frac{t}{T[k]}} \cdot d[k]\right\}$$

$$\frac{T[k]}{d[k]}$$

$$Te[k]=T[k]\frac{2\pi}{\sqrt{1-d^2[k]}}$$

13